## Europäisches Patentamt
## European Patent Office
## Office européen des brevets

(19)

(11) Veröffentlichungsnummer: **0 001 973**
**B1**

(12)

# EUROPÄISCHE PATENTSCHRIFT

(45) Veröffentlichungstag der Patentschrift:
28.01.81

(51) Int. Cl.³: **B 62 D 33/04,** B 62 D 33/06

(21) Anmeldenummer: **78100985.7**

(22) Anmeldetag: **25.09.78**

---

(54) **Kippbares Fahrerkabinenteil an Lastkraftwagen mit Kastenaufbau in Pullmannform.**

---

(30) Priorität: **03.10.77 DE 2744429**

(43) Veröffentlichungstag der Anmeldung:
**30.05.79 Patentblatt 79/11**

(45) Bekanntmachung des Hinweises auf die Patenterteilung:
**28.01.81 Patentblatt 81/4**

(84) Benannte Vertragsstaaten:
**BE CH FR GB LU NL SE**

(56) Entgegenhaltungen:
**DE-B-1 530 871**
**US-A-1 856 773**
**US-A-2 773 304**
**US-A-3 405 778**

(73) Patentinhaber: **Theodor Warneke, Fahrzeugbau,
Hildesheimer Strasse 59, D-3011 Laatzen (DE)**

(72) Erfinder: **Leistikow, Günter, Ing.(grad),
Wiehbergstrasse 39A, D-3000 Hannover 81 (DE)**

(74) Vertreter: **Junius, Walther, Dr., Wolfstrasse 24,
D-3000 Hannover 81 (DE)**

---

Kippbares Fahrerkabinenteil an Lastkraftwagen mit Kastenaufbau in Pullmannform

Die Erfindung betrifft einen Lastkraftwagen mit Kastenaufbau in Pullmannform, über dessen in den Kastenaufbau einbezogener Fahrerkabine ein Laderaum und/oder ein Schlafraum und unter dessen Fahrerkabine ein Motor befindlich ist.

Seit vielen Jahrzehnten sind im Möbel-Speditionsgewerbe Lastkraftwagen mit Kastenaufbau in Pullmannform beliebt. Hier ist in den Kastenaufbau die Fahrerkabine einbezogen, die oftmals noch eine zweite Sitzbank enthält, um die für den Möbeltransport notwendigen Umzugsleute in ihrer gesamten Anzahl in der Fahrerkabine mitnehmen zu können. Dieser Kastenaufbau in Pullmannform ist deshalb so beliebt, weil sich oberhalb der Fahrerkabine noch ein gut nutzbarer Laderaum erheblicher Grösse und/oder ein Schlafraum befindet. Um die zulässigen Fahrzeuglängen gut auszunutzen, ordnet man unter der Fahrerkabine den Motor an, dessen obere Abdeckung sich oftmals teilweise in die Fahrerkabine hinein erstreckt. Diese Anordnung des Motors hat den Nachteil, dass der Motor schwer zugänglich ist. Will man am Motor Reparaturarbeiten vornehmen, so muss man Fahrer- und Beifahrersitz entfernen, die Motorhaube entfernen und dann innerhalb der Fahrerkabine montieren.

Um diesen Nachteil zu vermeiden, werden in den letzten Jahren Lastkraftwagen mit Kastenaufbau in Pullmannform nicht mehr hergestellt. Es werden stattdessen Lastkraftwagen mit Kofferaufbau hergestellt, deren Koffer von der Fahrerkabine getrennt ist. Die Fahrerkabine ist um ein Gelenk am vorderen unteren Ende der Fahrerkabine verschwenkbar am Fahrzeugrahmen befestigt, so dass zu einer Motorreparatur die gesamte Fahrerkabine nach vorne geklappt wird und dadurch der Motor leicht zugänglich wird. Diese Konstruktion hat jedoch für das Möbeltransportgewerbe den Nachteil, dass die hierfür vorgesehenen Lastkraftwagen nur einen Kofferaufbau haben können, jedoch keinen Kastenaufbau und insbesondere nicht einen Kastenaufbau in Pullmannform. Dieses wird von dem Möbeltransportgewerbe als gewichtiger Nachteil angesehen. Denn der Lastkraftwagen mit Kastenaufbau in Pullmannform hat speziell für dieses Gewerbe ausserordentliche Vorteile. Daher erschallt von Unternehmern und Arbeitern dieses Gewerbes seit Jahren der Ruf nach einem Lastkraftwagen mit Kastenaufbau in Pullmannform, dessen Motor leicht zugänglich sein soll.

Alle Konstruktionsversuche zur Herstellung eines derartigen Wagens schlugen jedoch wegen der an ihnen haftenden Nachteile fehl.

Es ist die Aufgabe der Erfindung, einen Lastkraftwagen mit Kastenaufbau in Pullmannform zu schaffen, dessen Motor ebenso leicht zugänglich ist, wie es der Motor bei Lastkraftwagen mit verschwenkbarer Fahrerkabine und Kofferaufbau ist.

Die Erfindung löst die Aufgabe dadurch, dass der Kasten eine Trennlinie im Bereich der Fahrerkabine aufweist, die hinter den zum Fahrer- und Beifahrersitz führenden Türen verläuft, dass die vor dieser Trennlinie liegenden Bodenteile der Fahrerkabine einschliesslich des Fahrersitzes und des Beifahrersitzes zusammen mit den beiden Türen, der Windschutzscheibe, deren Rahmen und den unter der Windschutzscheibe liegenden Frontseitenteilen ein gemeinsames Bauteil bilden, das um ein am vorderen unteren Ende der Kastenform liegendes Gelenk verschwenkbar ist, dass beidseitig der Trennlinie je ein Verstärkungsbügel in das verschwenkbare Bauteil und in den Kasten eingearbeitet sind, dass längs der Trennlinie eine Dichtung mit Regenablaufschlitz oder -rinne angeordnet ist und dass mindestens zwei Zentriervorrichtungen und zwei Festspannvorrichtungen im Bereich der Trennlinie vorgesehen sind.

Bei diesem Lastkraftwagen kann ein Teil des Kastenaufbaues, der zumindest einen Teil der Frontseite, die beiden Türen und den vorderen Teil des Bodens mit Fahrer- und Beifahrersitz umfasst, aus dem Kasten herausgeklappt werden, so dass nunmehr der Motor frei zugänglich darliegt und auch leicht aus dem Fahrgestell herausgenommen werden kann, indem er mit einem seitwärts anfahrenden Gabelstapler gehoben und zur Seite hin herausgefahren wird. Dabei kann der Kastenaufbau die alte bewährte Form des Kastenaufbaues in Pullmannform erhalten. Ist eine weitere Sitzreihe für Mitfahrer vorgesehen, so bleibt diese im Inneren des Kastens stehen, wenn das verschwenkbare Bauteil für eine Motorreparatur herausgeklappt wird. Auch der Laderaum oberhalb der Fahrerkabine bleibt unberührt und durch das Verschwenken des Bauteiles ungeöffnet, was wichtig ist für Transporte, die unter Zollverschluss auszuführen sind. Auch ein hier oberhalb der Fahrerkabine angeordneter Schlafraum kann bei geeigneter Führung der Trennlinie unberührt von einem Verschwenken des Bauteiles bleiben.

Durch die beidseitig der Trennlinie angeordneten Verstärkungsbügel an dem verschwenkbaren Bauteil und an dem Kasten ist erreicht, dass eine sehr stabile Konstruktion geschaffen ist, die in ihrer Stabilität den insgesamt verschwenkbaren Fahrerkabinen nicht nachsteht. Zusätzlich ist der Vorteil erreicht, dass für eine Motorreparatur die Fahrerkabine nicht wie bei den insgesamt verschwenkbaren Fahrerkabinen ausgeräumt werden muss, damit nicht im hinteren Bereich der Fahrerkabine lose abgestellte Sachen, wie Koffer, Taschen, Bettzeug und ähnliches durcheinanderfallen. Dieser Vorteil ist dadurch erzielt, dass nur der vordere Teil der Fahrerkabine verschwenkt wird, wobei die vorne in Handschuhfächern und dergleichen untergebrachten Sachen ebenfalls nicht ausgeräumt werden müssen, da diese Sachen beim Verschwenken des verschwenkbaren Bauteiles an ihrem Ort liegenbleiben. Durch die Anordnung einer Dichtung mit Regenablaufschlitz oder -rinne und durch die Anordnung von mindestens zwei Zentrier- und zwei Festspannvorrichtungen ist erreicht, dass – obwohl nur ein Teil der Fahrerkabine verschwenkt wird – die Fahrerkabine zugfrei und regendicht ist.

Man könnte die Trennlinie exakt vertikal hinter den Türen verlaufen lassen, die zum Fahrer- und Beifahrersitz führen. Dann jedoch wird ein Teil des oberhalb der Fahrerkabine befindlichen Laderaumes bzw. Schlafraumes mit verschwenkt, und es ist nicht mehr möglich, ohne Öffnen von Zollverschlüssen an den Motor heranzukommen. Es sind daher im wesentlichen zwei besondere Ausbildungsformen der vorliegenden Erfindung, die die Gewähr für ein einfaches, bequemes und schnelles Erreichen des Motors gewährleisten:

Die eine Möglichkeit der Ausführung besteht darin, dass die Trennlinie hinter den Türen vertikal und anschliessend nach oben unter einem spitzen Winkel zur Vertikalen verläuft, wobei die Trennlinie hier ausserhalb eines gedachten Kreises verläuft, dessen Radius durch den Abstand der Knickstelle der Trennlinie von dem Gelenk gegeben ist.

Die andere Ausführungsform besteht darin, dass die Trennlinie im Bodenbereich unterhalb der Hinterkante der Tür und an der Frontseite dicht über dem die Windschutzscheibe aufnehmenden Rahmen und von dessen Kanten zur oberen vorderen Ecke der Tür und durch deren Rahmen verläuft.

Das Wesen der vorliegenden Erfindung ist nachstehend anhand eines in der Zeichnung schematisch dargestellten Ausführungsbeispieles näher erläutert. Es zeigen:

Fig. 1 eine Seitenansicht des LKW der einen Ausführungsform.

Fig. 2 den LKW der Fig. 1 mit geöffnetem Motorraum.

Fig. 3 eine andere Ausführungsform des LKWs in Seitenansicht.

Fig. 4 eine Ansicht des LKWs der Fig. 3 mit geöffnetem Motorraum.

Fig. 5 einen Schnitt durch eine Dichtung im Bereich der Trennlinie.

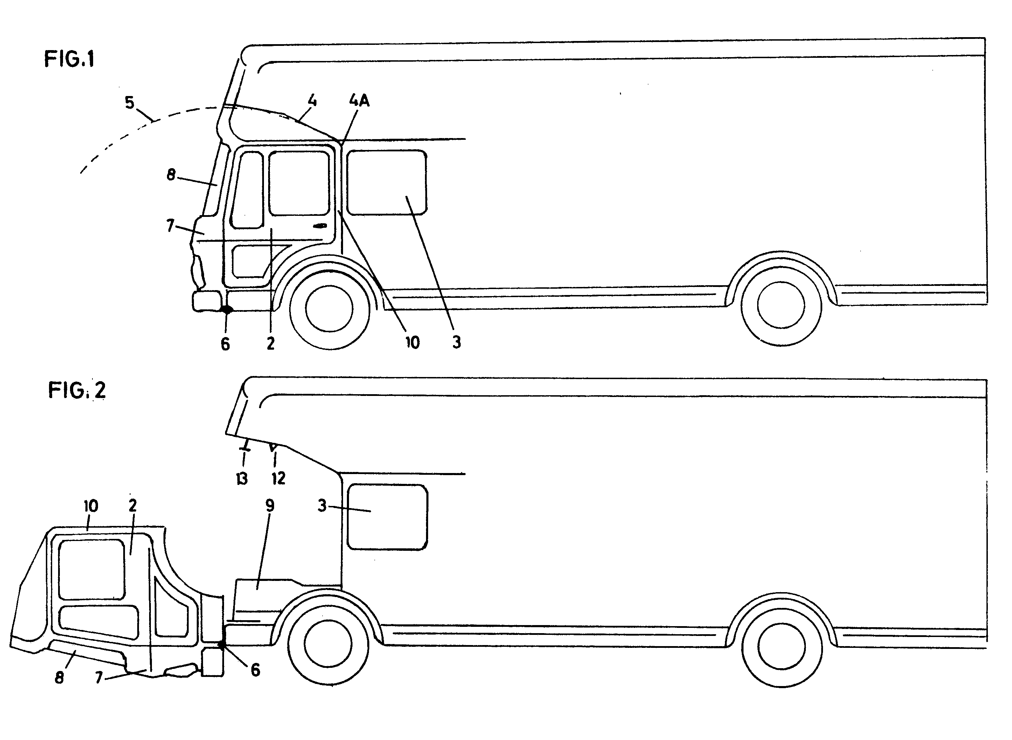

In den Zeichnungen Fig. 1 bis 4 ist ein Lastkraftwagen gezeigt, der einen Kastenaufbau in Pullmannform aufweist, wie er im Möbel-Speditionsgewerbe sehr beliebt ist. Hinter der Tür 2 befindet sich der Fahrersitz. Hinter der Tür 2 ist im Kastenaufbau ein Fenster 3 befindlich, hinter welchem sich eine Sitzbank für Mitfahrer befindet. Auf dieser Sitzbank werden gern Möbelpacker von einem Umzugsort zum anderen befördert. Der Kastenaufbau weist eine Trennlinie 4 auf, durch die der vordere untere Teil des Kastens von den übrigen Teilen des Kastens getrennt ist. Die Trennlinie verläuft hinter den Türen 2 vertikal und anschliessend nach oben unter einem spitzen Winkel zur Vertikalen, wobei die Trennlinie hier ausserhalb eines gestrichelt dargestellten, gedachten Kreises 5 verläuft, dessen Radius durch den Abstand der Knickstelle der Trennlinie 4A, nämlich derjenigen Stelle 4A, an der der vertikale Teil der Trennlinie 4 in den schräg nach oben verlaufenden Teil der Trennlinie 4 übergeht, von dem Gelenk 6 gegeben ist. Um dieses vorn am Fahrgestell befestigte Gelenk 6 ist der untere Teil der Frontseite 7, die Windschutzscheibe 8, die beiden Türen 2, der vordere Teil des Bodens der Fahrerkabine zusammen mit Fahrer- und Beifahrersitz nach vorne aussen verschwenkbar, wie es die Fig. 2 darstellt. In dieser aufgeklappten Stellung ist der Motor 9 leicht zugänglich.

Bei dieser in den Fig. 1 und 2 dargestellten Ausführungsform verläuft die Trennlinie 4 hinter dem Rahmen 10 der Fahrer- und Beifahrertür. Der Rahmen 10 wird somit ebenfalls verschwenkt, wenn der Motor zugänglich gemacht werden soll.

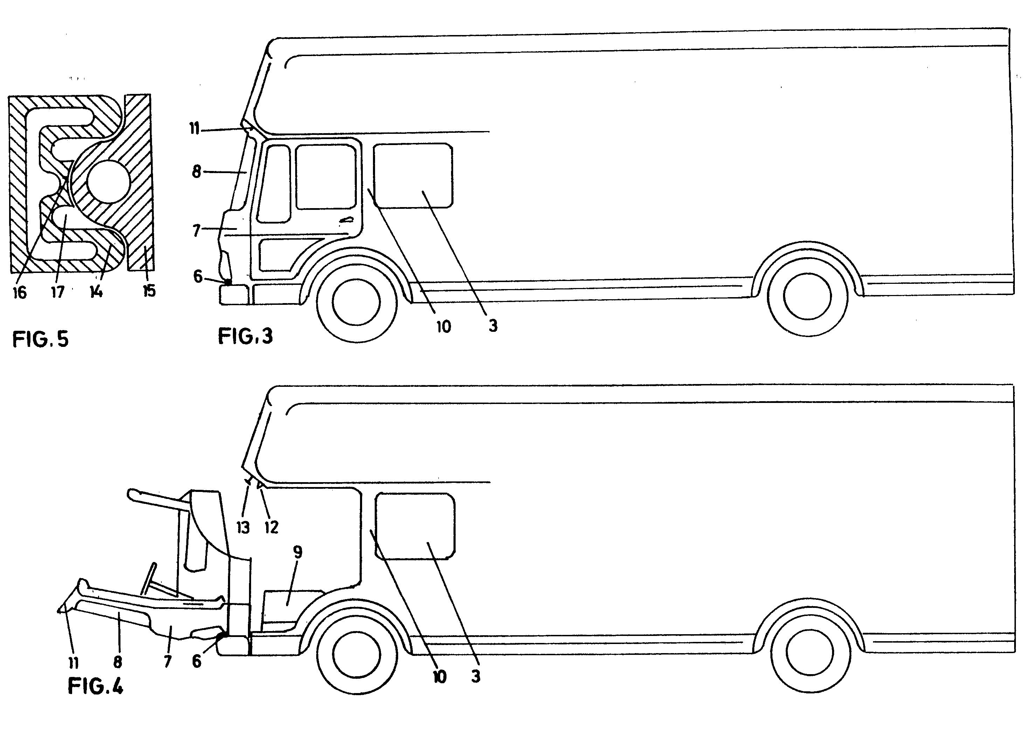

Eine andere Möglichkeit der Anordnung der Trennlinie 4 ist in den Fig. 3 und 4 gezeigt. Hier ist die Trennlinie oberhalb des Rahmens 11 der Windschutzscheibe 8 angeordnet. Beim Verschwenken des Bauteiles, welches aus der Windschutzscheibe 8, den Frontseitenteilen 7, den Türen 2 und dem Boden zusammen mit Fahrer- und Beifahrersitz besteht, wird der hintere und obere Teil des Türrahmens 10 nicht mitverschwenkt. Daher sind vor dem Verschwenken beide Türen weit zu öffnen, wonach der Verschwenkvorgang vorgenommen werden kann, wie es in Fig. 4 dargestellt ist, wo die Türen in geöffneter Stellung gezeigt sind.

Zentriervorrichtungen 12 in Form von kegelförmigen Dornen und Festspannvorrichtungen 13 sind gestrichelt angedeutet. Sie dienen einer Befestigung des verschwenkbaren Bauteiles an den übrigen Teilen des Kastens. Sie dienen gleichzeitig zum Zusammenpressen der in Fig. 5 im Querschnitt gezeigten Dichtung, die auf einer Seite aus einem Gummiprofil von in etwa U-förmiger Gestalt mit innenliegenden Hohlräumen besteht und auf der anderen Seite aus einem im Querschnitt gewölbten Bauteil 15 besteht, welches in den Raum zwischen den beiden Schenkeln des U-förmigen Dichtungsbauteiles 14 eingreift. Beidseitig einer Mittellippe 16 sind Hohlräume 17 geschaffen, die als Regenablaufschlitz bzw. Regenrinne dienen und in den Spalt zwischen den Dichtungsteilen 14 und 15 eindringenden Regen wieder nach aussen abführen.

Neben den aufgezeigten Vorteilen ist zu erwähnen, dass durch das geringe Gewicht des schwenkbaren Bauteiles die Verschwenkung leicht erfolgen kann. Es darf auch erwähnt werden, dass beim Bau dieser Lastkraftwagen, die ja wegen der relativ geringen Stückzahlen in Einzelanfertigung hergestellt werden, serienmässig hergestellte Fahrerkabinen benutzt werden können, wenn in diese die Trennlinie eingearbeitet wird. Dadurch wird die Herstellung dieses Lastkraftwagens billig, denn die in grossen Serien hergestellten verschwenkbaren Fahrerkabinen sind in ihrer Anschaffung billiger als in Einzelanfertigung hergestellte. Hat der Lastkraftwagen Schlafräume oberhalb der Fahrerkabine, so wird das Dach der handelsüblich käuflichen Fahrerkabinen herausgeschnitten, um den Schlafraum von der Fahrerkabine zugänglich zu machen.

Die in den Zeichnungen nicht zu sehenden Bügel, die hinter den Aussenseiten des Kastens zum Inneren zu angeordnet sind, verlaufen im Kasten unmittelbar dicht neben der Trennlinie. Im Ausführungsbeispiel der Fig. 1 und 2 verläuft der Bügel des verschwenkbaren Bauteiles neben dem vertikalen Teil der Trennlinie 4 parallel zum Rahmen 10 der Tür 2. Oberhalb verläuft der Bügel zweckmässigerweise ebenfalls parallel zur Trennlinie 4 und spannt sich hier von einem Türrahmen 10 zum gegenüberliegenden Türrahmen 10.

Im Ausführungsbeispiel der Fig. 3 und 4 verläuft der Verstärkungsbügel am verschwenkbaren Bauteil parallel oder in dem Rahmenholmen des Rahmens 11 der Windschutzscheibe.

## Patentansprüche

1. Lastkraftwagen mit Kastenaufbau in Pullmannform, über dessen in den Kastenaufbau einbezogener Fahrerkabine ein Laderaum und/oder ein Schlafraum und unter dessen Fahrerkabine der Motor befindlich ist, dadurch gekennzeichnet, dass der Kasten eine Trennlinie (4) im Bereich der Fahrerkabine aufweist, die hinter den zum Fahrer- und Beifahrersitz führenden Türen (2) verläuft, dass die vor dieser Trennlinie (4) liegenden Bodenteile der Fahrerkabine einschliesslich des Fahrersitzes und des Beifahrersitzes zusammen mit den beiden Türen (2), der Windschutzscheibe (8), deren Rahmen (11) und den unter der Windschutzscheibe (8) liegenden Frontseitenteilen (7) ein gemeinsames Bauteil bilden, das um ein am vorderen unteren Ende der Kastenform liegendes Gelenk (6) verschwenkbar ist, dass beidseitig der Trennlinie (4) je ein Verstärkungsbügel in das verschwenkbare Bauteil und in den Kasten eingearbeitet sind, dass längs der Trennlinie (4) eine Dichtung (14, 15) mit Regenablaufschlitz oder -rinne angeordnet ist, und dass mindestens zwei Zentriervorrichtungen (12) und zwei Festspannvorrichtungen (13) im Bereich der Trennlinie (4) vorgesehen sind.

2. Lastkraftwagen nach Anspruch 1, dadurch gekennzeichnet, dass die Trennlinie (4) hinter den Türen (2) vertikal und anschliessend nach oben von der Oberkante der Türen (2) an unter einem spitzen Winkel zur Vertikalen verläuft, wobei die Trennlinie (4) hier ausserhalb eines gedachten Kreises (5) verläuft, dessen Radius durch den Abstand der Knickstelle (4A) der Trennlinie (4) von dem Gelenk (6) gegeben ist.

3. Lastkraftwagen nach Anspruch 1, dadurch gekennzeichnet, dass die Trennlinie (4) im Bodenbereich unterhalb der Hinterkante der Tür (2) und an der Frontseite dicht über dem die Windschutzscheibe (8) aufnehmenden Rahmen (11) und von dessen Kanten zur oberen vorderen Ecke der Tür (2) und durch deren Rahmen (10) verläuft.

## Claims

1. Lorry having a box body of the Pullman type in which the driver's cab is included, wherein a loading space and/or a sleeping space is arranged over the driver's cab and wherein the motor is arranged under the driver's cab, characterised in that in the region of the driver's cab, the body has a separating line (4) which runs behind the doors (2) leading to the driver's and assistant driver's seats, that the floor elements of the driver's cab which are located in front of this separating line (4), inclusive of the driver's seat and the assistant driver's seat, together with the two doors (2), the windscreen (8), its frame (11) and the front elements (7) which lie under the windscreen, all form a unitary component which can be pivoted about a hinge (6) which is arranged at the forward lower end of the box body, that on both sides of the separating line (4), a reinforcement bracket is incorporated in the pivotal component and in the box, respectively, that along the separating line (4) there is arranged a seal (14, 15) having a runoff slit of runoff gutter for rain, and that at least two centering devices (12) and two clamping devices (13) are arranged in the region of the separating line (4).

2. Lorry as claimed in Claim 1, characterised in that the separating line (4) runs vertically behind the doors (2) and subsequently towards the top from the upper edge of the doors (2) at an acute angle to the vertical, the separating line (4) running outside an imaginary circle (5) whose radius is determined by the distance of the knee or bend (4A) in the separating line (4) from the hinge (6).

3. Lorry as claimed in Claim 1, characterised in that the separating line (4) in the floor region runs underneath the rear edge of the door (2) and on the front side runs closely above the frame (1) which accommodates the windscreen (8) and from the edges of the frame towards the upper front corner of the door (2) and through the frame (10) of the latter.

## Revendications

1. Camion à fourgon de forme Pullmann, comportant au-dessus de la cabine de conduite incorporée au fourgon un espace pouvant être réservé à la charge et/ou utilisé en cabine de repos, le moteur du véhicule étant par ailleurs installé sous la cabine de conduite, caractérisé par le fait que le fourgon présente dans la zone de la cabine de conduite une ligne de séparation (4) passant derrière les portes (2) donnant accès aux postes du conducteur et de l'aide-conducteur, par le fait que les parties du plancher de la cabine de conduite, postes de conducteur et d'aide conducteur compris situées devant cette ligne de séparation (4) forment un sous-ensemble de construction commun avec les deux portes (2), le pare-brise (8), son cadre (11) et les parties frontales (7) situées au-dessous du pare-brise (8), sous-ensemble pouvant pivoter autour d'une articulation (6) située à l'extrémité avant inférieur du fourgon, par le fait que de chaque côté de la ligne de séparation (4), un étrier de renforcement est incorporé au sous-ensemble pivotant et au fourgon, par le fait qu'un joint (14, 15) équipé d'une fente ou d'une rainure d'évacuation d'eau de pluie est disposé au long de la ligne de séparation (4), et par le fait que sont prévus au moins deux systèmes de centrage (12) et deux systèmes de blocage (13) au voisinage de la ligne de séparation.

2. Camion selon la revendication 1, caractérisé par le fait que la ligne de séparation (4) est orientée verticalement derrière les portes (2) puis, vers le haut, à partir du bord supérieur des portes (2), fait un angle aigu avec la verticale, la ligne de séparation (4) passant alors à l'extérieur d'un cercle imaginaire (5) dont le rayon est déterminé par la distance séparant de l'articulation (6) les points d'inflexion (4A) de la ligne de séparation (4).

3. Camion selon la revendication 1, caractérisé par le fait que la ligne de séparation (4) passe, dans la zone du plancher, au-dessous du bord inférieur de la porte (2) et, sur le côté frontal, contre le cadre (11) servant au montage du pare-brise, cette ligne de séparation passant ensuite par le bord de ce cadre, le coin supérieur avant de la porte (2) et le cadre (10) de celle-ci.

FIG.1

FIG. 2

0 001 973

FIG. 5

16  17  14  15

FIG. 3

11
8
7
6
10  3

0 001 973

FIG. 4

11  8  7  6
13  12
9
10  3